# EUROPÄISCHE PATENTSCHRIFT

(11) **EP 2 521 859 B1**
(45) Veröffentlichungstag und Bekanntmachung des Hinweises auf die Patenterteilung: **06.04.2016**
(21) Anmeldenummer: 11700820.1
(22) Anmeldetag: 10.01.2011
(51) Int. Cl.: F03D 80/00

(54) **WINDENERGIEANLAGE**
WIND POWER PLANT
ÉOLIENNE

(30) Priorität: 08.01.2010 DE 102010000756
(43) Veröffentlichungstag der Anmeldung: 14.11.2012
(73) Patentinhaber: Wobben Properties GmbH, 26607 Aurich (DE)
(72) Erfinder: RÖER, Jochen, 27777 Ganderkesee (DE)
(74) Vertreter: Eisenführ Speiser
(86) Internationale Anmeldenummer: PCT/EP2011/050202
(87) Internationale Veröffentlichungsnummer: WO 2011/083156

(56) Entgegenhaltungen:
- WO-A1-01/21956
- WO-A1-2009/115100
- DE-A1- 10 233 947
- DE-A1-102007 012 408
- DE-A1-102007 042 338

## Beschreibung

Die vorliegende Erfindung betrifft eine Windenergieanlage mit einer Gondel mit wenigstens einer flüssigkeitsgekühlten Komponente und mit einem Rückkühler. Solche Windenergieanlagen sind im Stand der Technik in großer Zahl bekannt.

Weiterhin sind Windenergieanlagen mit unterschiedlichen Gondelformen bekannt. Dabei sind im Wesentlichen rechteckige (kastenförmige) Gondeln ebenso vertreten wie zylindrische und einer Tropfenform angenäherte Gondeln.

Da ein Rückkühler, um seine Funktion erfüllen zu können, die abzuführende Wärme an die Umgebung abgeben können muss, ist es üblich, diesen bei Windenergieanlagen auf der Oberseite der Gondel anzuordnen. Dies geschieht z. B. beim Errichten einer Windenergieanlage auf der Baustelle, damit der auf der Gondel angeordnete Rückkühler Transport und Handhabung der Gondel nicht erschwert bzw. dabei beschädigt werden kann. Daher wird der Rückkühler üblicherweise während der Errichtung der Windenergieanlage auf der Baustelle montiert. Dabei kann es aber zu verschiedensten Montagefehlern kommen, die die einwandfreie Funktion des Rückkühlers beeinträchtigen.

WO 2009/115100 A1 zeigt eine Windenergieanlage mit einer Gondel und einer flüssigkeitsgekühlten Komponente sowie einem Rückkühler.

DE 10 2007 042 338 A1 zeigt eine Windenergieanlage mit einem Wärmetauschersystem und einer Gondel mit einer flüssigkeitsgekühlten Komponente.

DE 102 33 947 A1 zeigt eine Windenergieanlage mit einer Gondel und mit wenigstens einer flüssigkeitsgekühlten Komponente.

Aufgabe der vorliegenden Erfindung ist es daher, Transport und Aufbau einer Windenergieanlage mit einem Rückkühler zu vereinfachen und so Fehlerquellen zu beseitigen oder wenigstens zu verringern.

Dies wird bei einer Windenergieanlage der eingangs genannten Art erfindungsgemäß verwirklicht durch eine Integration des Rückkühlers in die äußere Kontur der Gondel.

Die Aufgabe der Erfindung wird durch eine Windenergieanlage nach Anspruch 1 gelöst.

Somit wird eine Windenergieanlage mit einer Gondel mit wenigstens einer flüssigkeitsgekühlten Komponente und einem Rückkühler vorgesehen. Der Rückkühler ist dabei in die äußere Kontur der Gondel integriert. Der Rückkühler ist auf einem Träger angeordnet und der Träger ist als separates Gondelbauteil ausgebildet.

Gemäß einem Aspekt der vorliegenden Erfindung weist der Rückkühler wenigstens ein Rippenrohr auf.

Gemäß einem weiteren Aspekt der vorliegenden Erfindung ist der Rückkühler aus einem zumindest teilweise durchgehend gewickelten Rippenrohr ausgebildet.

Gemäß einem weiteren Aspekt der vorliegenden Erfindung weist der Rückkühler mehrere parallel angeordnete Rippenrohre auf.

Gemäß einem weiteren Aspekt der vorliegenden Erfindung ist der Träger als umlaufende Ausnehmung in der Kontur der Gondel ausgebildet.

Gemäß einem weiteren Aspekt der vorliegenden Erfindung weist die Windenergieanlage in Richtung einer Gondellängsachse einen Niederhalter auf, der das Rippenrohr in seiner Einbaulage hält.

Gemäß einem weiteren Aspekt der vorliegenden Erfindung weist die Windenergieanlage einen Lüfter auf, der derart angeordnet ist, dass die von ihm angesaugte Luft den Rückkühler umströmt.

Dabei liegt der vorliegenden Erfindung die Erkenntnis zugrunde, dass dadurch bei Transport und Handhabung der Gondel keine nennenswerten Änderungen erforderlich sind, gleichzeitig der Rückkühler aber beim Zusammenbau der Gondel im Werk mit installiert werden und auf einwandfreie Funktion getestet werden kann. Dies führt zu einer Vereinfachung bei Transport und Aufbau der Windenergieanlage und beseitigt gleichzeitig mögliche Fehlerquellen.

In einer bevorzugten Ausführungsform ist der Rückkühler aus wenigstens einem Rippenrohr gebildet. Ein solches Rippenrohr kann auf einfache Weise so gebogen werden, dass es der Kontur der Gondel folgt und lässt sich deshalb gut an die Gondelkontur anpassen.

In einer bevorzugten Ausführungsform ist der Rückkühler aus wenigstens einem Rippenrohr gebildet. Ein solches Rippenrohr kann auf einfache Weise so gebogen werden, dass es der Kontur der Gondel folgt und lässt sich deshalb gut an die Gondelkontur anpassen.
Eine hohe Sicherheit ergibt sich, wenn der Rückkühler aus einem durchgehend gewickelten Rippenrohr gebildet ist, weil dann Verbindungsstellen und damit mögliche Fehlerstellen, an denen es z. B. zu Undichtigkeiten kommen kann, entfallen.
Um eine ausreichende Kühlleistung bereit zu stellen, kann der Rückkühler auch aus mehreren parallel angeordneten Rippenrohren gebildet sein, so dass sich ein größerer verfügbarer Querschnitt ergibt, in dem die Kühlflüssigkeit gekühlt werden kann.
Besonders bevorzugt ist der Rückkühler auf einem Träger angeordnet. Dadurch kann dieser Rückkühler als eine Baueinheit vorproduziert werden und als Anbauteil an der Gondel angebracht werden. So kann eine Funktionsprüfung z. B. schon vor dem Anbau an der Gondel erfolgen, so dass beim Zusammenbau der Gondel sicher ein einwandfreier Rückkühler zur Verfügung steht.

Um das Rippenrohr bzw. die Rippenrohre des Rückkühlers in ihrer vorgesehenen Einbaulage zu halten, können über den Umfang des Rückkühlers verteilte und im Wesentlichen in Richtung der Gondellängsachse angeordnete Niederhalter vorgesehen sein.
In einer bevorzugten Weiterbildung der Erfindung ist ein Lüfter vorgesehen, der so angeordnet ist, dass die von ihm angesaugte Luft den Rückkühler umströmt. Dadurch wird ein aktiver Rückkühler und eine definierte Kühlleistung des Rückkühlers verwirklicht.
Eine vorteilhafte Ausführungsform der Erfindung ist in den Figuren dargestellt. Dabei zeigen:
- Fig. 1: eine vereinfachte Darstellung einer Windenergieanlage;
- Fig. 2: eine vergrößerte Darstellung der Gondel der Windenergieanlage in Fig. 1;
- Fig. 3: eine Seitenansicht eines erfindungsgemäßen Rückkühlers als Anbauteil;
- Fig. 4: eine Draufsicht eines erfindungsgemäßen Rückkühlers; und
- Fig. 5: eine perspektivische Ansicht des Rückkühlers mit dem Strömungsverlauf der vom Lüfter angesaugten Kühlluft.

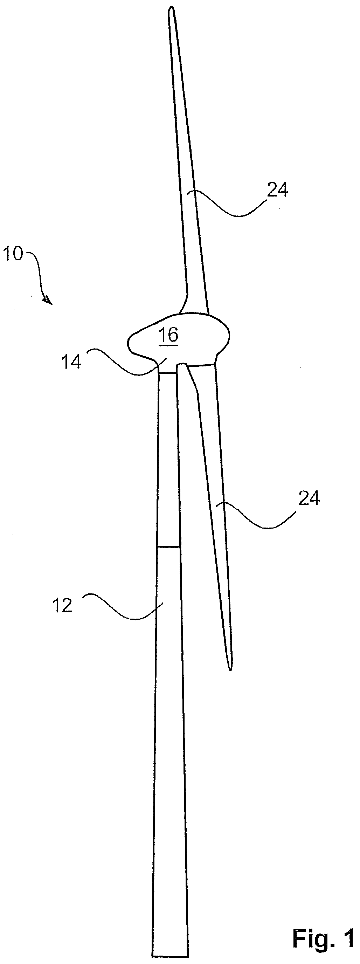

Fig. 1 zeigt eine stark vereinfachte Darstellung einer Windenergieanlage 10. Der Turm 12 trägt die Gondel 16 (alternativ kann für die Gondel auch der Begriff Maschinenhaus verwendet werden). Die Gondel 16 ist unter Vermittlung eines (nicht dargestellten) Azimutlagers auf einem Kopf des Turmes 12 gelagert, so dass über (ebenfalls nicht dargestellte) Azimutantriebe eine Windrichtungsnachführung verwirklicht werden kann. Der Übergang zwischen Gondel 16 und Turm 12 ist von einer Gondelschürze 14 abgedeckt und so gegen Witterungseinflüsse geschützt.

Die Gondel 16 beinhaltet auch die (ebenfalls nicht dargestellte) Nabe, an welcher die Rotorblätter 24 angebracht sind. Durch die Rotorblätter 24 wird die Nabe (mit dem vorderen Teil der Gondel 16) in Rotation versetzt. Diese Rotationsbewegung wird auf den Läufer des Generators übertragen, so dass die Windenergieanlage 10 bei ausreichender Windgeschwindigkeit elektrische Energie erzeugt.

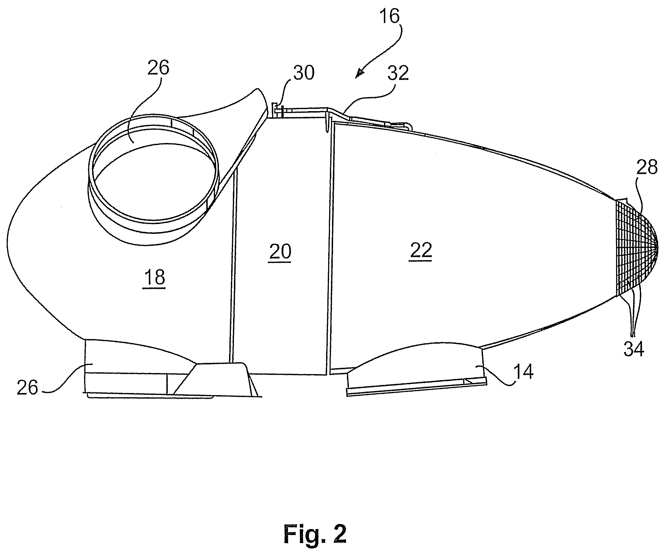

Fig. 2 zeigt eine detailliertere Darstellung der Gondel 16 der Windenergieanlage von Fig. 1. Die Gondel weist eine Gondelschürze 14 auf, welche den Übergang von der Gondel 16 zu dem (in dieser Fig. nicht dargestellten) Turm abdeckt. Die Gondel 16 weist einen vorderen Gondelteil 18 sowie einen hinteren Gondelteil 22 auf. Zwischen diesen beiden Gondelteilen kann sich der Generator 20 befinden. Dieser Generator 20 kann optional als Ringgenerator ausgeführt werden.

Am vorderen Gondelteil 18 können Rotorblattdome 26 mit Blatterweiterungen vorgesehen werden. In diese Rotorblattdome 26 können jeweils die Rotorblattwurzeln der (in dieser Fig. nicht dargestellten) Rotorblätter geführt und an der Rotornabe befestigt, welche die Drehung unter Vermittlung durch ein Getriebe oder auch direkt, ohne Getriebe auf den Läufer als den drehenden Teil des Generators 20 (in dieser Fig. nicht dargestellt) überträgt.

Die bei ausreichender Windgeschwindigkeit erzeugte elektrische Energie wird im Generator 20 erzeugt und dann je nach Konzept der Windenergieanlage über einen (nicht dargestellten) Transformator z. B. direkt in das Netz eingespeist oder über (ebenfalls nicht dargestellte) Gleichrichter in einen Gleichstrom umgewandelt und dann über Wechselrichter wiederum mit geeigneter Frequenz und Phasenlage das Netz eingespeist. Ein Teil dieser beschriebenen Komponenten kann in der Gondel 16 untergebracht sein. In jedem Fall entsteht aber abhängig von der erzeugten Leistung im Generator 20 Verlustwärme, die durch Kühlung abgeführt werden muss. Diese Kühlung kann eine Luftkühlung sein; sie kann aber auch eine Kühlflüssigkeit wie z. B. Wasser verwenden. Gerade bei einer hohen thermischen Belastung kann eine Luftkühlung nicht ausreichen und eine Flüssigkeitskühlung kann erforderlich sein. Entsprechend kann der Generator 20 einen Generatorkühlanschluss 30 aufweisen, von dem eine Verbindung 32 bis zu dem Rückkühler 28 an einer Seite der Gondel (in der Fig. rechts) geführt wird. Die Kühlflüssigkeit fließt durch den Generatorkühlanschluss 30, die Verbindung 32 und durch den Rückkühler 28. Der Rückkühler 28 ist wiederum der Luftströmung ausgesetzt und weist eine ausreichend große Oberfläche auf, um die erforderliche Wärmeabfuhr sicher zu verwirklichen, so dass die entsprechend gekühlte Kühlflüssigkeit wiederum dem Generator zugeführt werden kann, um weiterhin die Verlustwärme zuverlässig abzuführen.

Der Rückkühler 28, der im vorliegenden Beispiel aus Rippenrohren 34 gebildet ist, fügt sich in die Kontur der Gondel 16 ein bzw. an, so dass die strömungsgünstige Form der Gondel 16 durch den Rückkühler 28 nicht nachteilig verändert wird. Mit anderen Worten, der Rückkühler ersetzt somit einen Teil der Gondel und ist an dessen Form angepasst, damit die ursprüngliche Form der Gondel erhalten wird, um eine möglichst strömungsgünstige Form zu erhalten. Der Rückkühler kann hierbei an dem dem Rotor 18 gegenüberliegenden Ende der Gondel vorgesehen sein und domförmig ausgestaltet sein. Alternativ bzw. zusätzlich dazu kann der Rückkühler im Querschnitt zumindest teilweise oval oder elliptisch ausgebildet sein. Alternativ dazu kann der Rückkühler kappenförmig ausgebildet sein. Auf diese Weise wird eine ausreichende Kühlung der Kühlflüssigkeit unter Ausnutzung der vorteilhaften Form der Gondel 16 verwirklicht. Ferner kann der Rückkühler eine elliptische Außenkontur aufweisen.

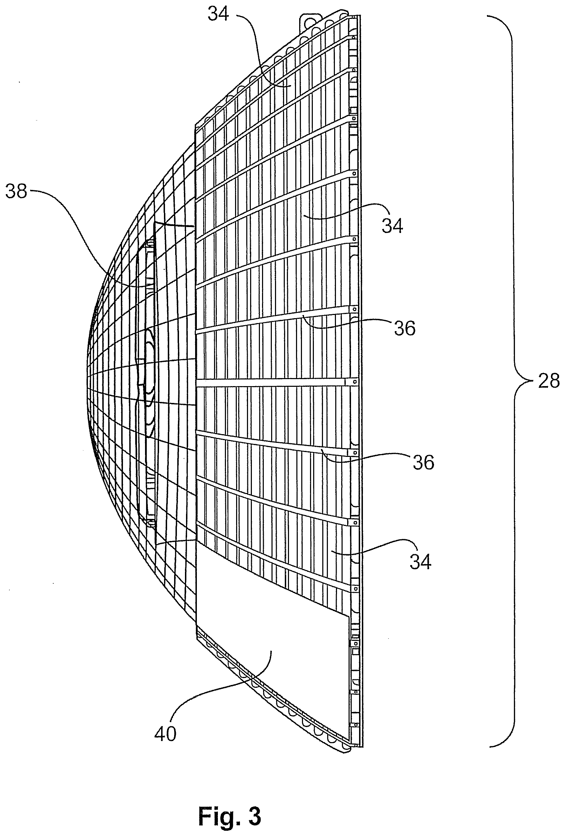

Fig. 3 zeigt einen erfindungsgemäßen Rückkühler 28 als separates Anbauteil. Dieser erfindungsgemäße Rückkühler weist Rippenrohre 34 auf, die so auf einen Träger gewickelt sind, dass die äußere Kontur eine im Wesentlichen formtreue Fortsetzung der Gondelkontur ist, d. h. die Kontur des Rückkühlers ist oval (im Querschnitt), domförmig oder kappenförmig. Damit die Rippenrohre 34 in ihrer Position bleiben, sind Niederhalter 36 vorgesehen, die die Rippenrohre 34 in der vorgegebenen Lage halten. In Strömungsrichtung hinter den Rippenrohren 34 kann ein Lüfter 38 angeordnet sein, der Luft so ansaugt, dass sie über die Rippenrohre 34 strömt und somit die überschüssige Wärme abgeführt werden kann.

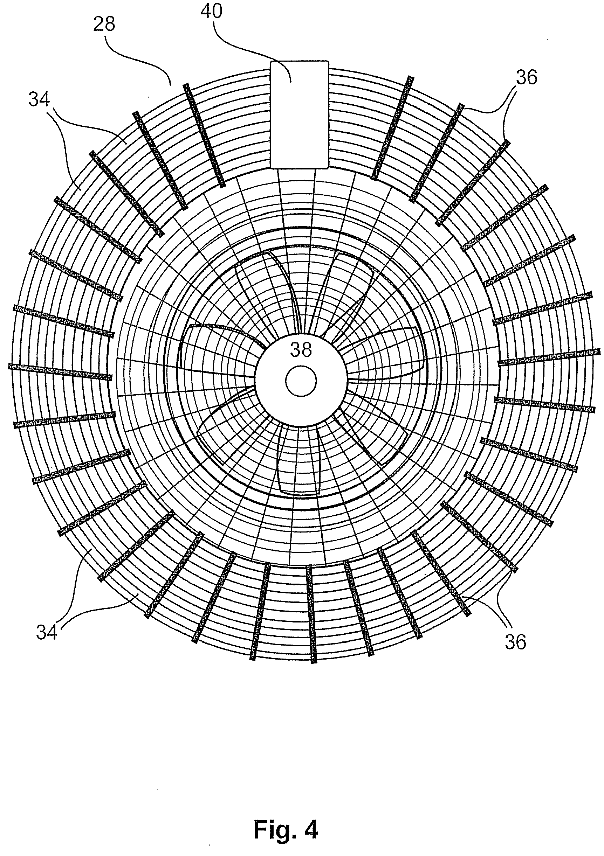

Während in Fig. 3 eine Seitenansicht einer beispielhaften Ausführungsform eines erfindungsgemäßen Rückkühlers dargestellt ist, zeigt Fig. 4 eine Rückansicht, also einen Anblick auf den Rückkühler 28, wie er sich von der Rückseite der Gondel aus darstellt. Dabei ist allerdings die Gondel, wie in Fig. 3, nicht mit dargestellt. Gut zu erkennen sind in dieser Fig. die Rippenrohre 34, die Niederhalter 36 und der Lüfter 38. Weiterhin ist in dieser Fig. auch gut ein Anschlusskasten 40 zu erkennen, an den sämtliche Rippenrohre 34 angeschlossen sind. Durch diesen Anschlusskasten 40 kann die Kühlflüssigkeit gleichzeitig durch alle Rippenrohre 34 strömen, so dass ein ausreichend großer Strömungsquerschnitt verwirklicht wird, um die erforderliche Wärmemenge über den Rückkühler 28 an die Umgebungsluft abzuführen. Dazu ist der Anschlusskasten 40 über eine (hier nicht dargestellte) Verbindung mit den zu kühlenden Komponenten in der Gondel der Windenergieanlage verbunden.

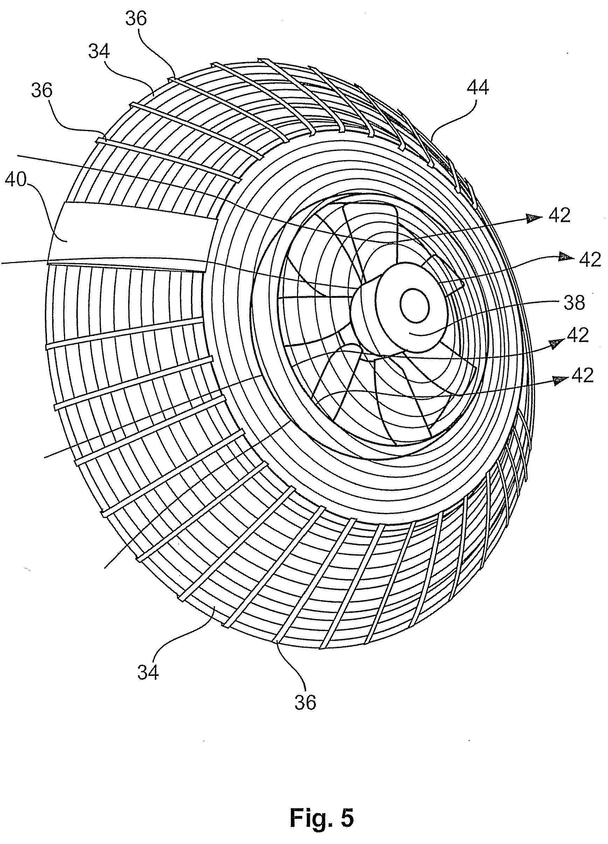

Eine etwas abgewandelte Ausführungsform des erfindungsgemäßen Rückkühlers 28 ist in Fig. 5 dargestellt. Diese Fig. zeigt eine perspektivische Ansicht, wiederum ohne die Gondel der Windenergieanlage. Von dem Anschlusskasten 40 aus verlaufen die Rippenrohre 34, wie bereits oben beschrieben, so, dass sie gleichzeitig von der Kühlflüssigkeit durchströmt werden können, um die erforderliche Kühlleistung verwirklichen zu können. Der Lüfter 38 ist wiederum am Ende des Rückkühlers 28 angeordnet und ist mit einer Abdeckung 44 versehen, welche eine bessere Führung des Luftstromes 42 erlaubt.

Wird der Lüfter 38 in Betrieb gesetzt, so bewirkt er eine Strömung der Umgebungsluft über die Oberfläche der Rippenrohre 34 in der durch Pfeile 42 angedeuteten Richtung, so dass mit diesem erfindungsgemäßen Rückkühler 28 eine aktive Kühlung verwirklicht werden kann, um die Abwärme an die Umgebungsluft abzugeben.

Da der erfindungsgemäße Rückkühler sich in die äußere Gondelkontur einpasst, wird auch das äußere Erscheinungsbild der Windenergieanlage allenfalls geringfügig beeinflusst, im Wesentlichen aber aufrecht erhalten. Entsprechend bleiben auch die Strömungsverhältnisse an der Gondel im Wesentlichen erhalten und gleichzeitig wird eine ausreichende Kühlleistung des Rückkühlers 28 verwirklicht.

## Patentansprüche

1. Windenergieanlage, mit
einer Gondel (16) mit wenigstens einer flüssigkeitsgekühlten Komponente und mit einem Rückkühler (28),
wobei der Rückkühler (28) in die äußere Kontur der Gondel (16) integriert ist,
**dadurch gekennzeichnet, dass**
der Rückkühler (28) auf einem Träger angeordnet ist und der Träger als separates Gondelanbauteil ausgebildet ist.

2. Windenergieanlage nach Anspruch 1, wobei
der Rückkühler (28) wenigstens ein Rippenrohr (34) aufweist.

3. Windenergieanlage nach einem der vorstehenden Ansprüche,
wobei der Rückkühler (28) ein zumindest teilweise durchgehend gewickeltes Rippenrohr (34) aufweist.

4. Windenergieanlage nach einem der Ansprüche 1 oder 2, wobei
der Rückkühler (28) mehrere parallel angeordnete Rippenrohre (34) aufweist.

5. Windenergieanlage nach einem der Ansprüche 2 bis 5, ferner mit
in Richtung einer Gondel-Längsachse angeordneten Niederhaltern (36), welche das Rippenrohr (34) bzw. die Rippenrohre (34) in ihrer Einbaulage halten.

6. Windenergieanlage nach einem der vorstehenden Ansprüche, ferner mit
einem Lüfter (38), der so angeordnet ist, dass die von ihm angesaugte Luft (42) den Rückkühler (28) umströmt.

## Claims

1. Wind turbine, having
a pod (16) having at least one fluid-cooled component and having a heat exchanger (28),
wherein the heat exchanger (28) is integrated in the outer contour of the pod (16),
**characterised in that**
the heat exchanger (28) is arranged on a carrier and the carrier is constructed as a separate pod attachment piece.

2. Wind turbine according to claim 1, wherein
the heat exchanger (28) has at least one ribbed pipe (34).

3. Wind turbine according to any one of the preceding claims,
wherein the heat exchanger (28) has a ribbed pipe (34) which is wound at least partially continuously.

4. Wind turbine according to either claim 1 or claim 2,
wherein the heat exchanger (28) has a plurality of ribbed pipes (34) which are arranged in parallel.

5. Wind turbine according to any one of claims 2 to 5, further having holding-down members (36) which are arranged in the direction of a longitudinal axis of the pod and which retain the ribbed pipe (34) or the ribbed pipes (34) in their installation position.

6. Wind turbine according to any one of the preceding claims, further having a ventilator (38) which is arranged in such a manner that the air (42) which is drawn in thereby flows around the heat exchanger (28).

## Revendications

1. Eolienne avec
une nacelle (16) avec au moins un composant refroidi par liquide et avec un réfrigérant de retour (28),
le réfrigérant de retour (28) étant intégré dans le contour extérieur de la nacelle (16),
**caractérisée en ce que**
le réfrigérant de retour (28) est disposé sur un support et le support est réalisé en tant que pièce rapportée de nacelle séparée.

2. Eolienne selon la revendication 1,
le réfrigérant de retour (28) présentant au moins un tube à ailettes (34).

3. Eolienne selon l'une quelconque des revendications précédentes,
le réfrigérant de retour (28) présentant un tube à ailettes (34) enroulé au moins en partie en continu.

4. Eolienne selon l'une quelconque des revendications 1 et 2,
le réfrigérant de retour (28) présentant plusieurs tubes à ailettes (354) disposés parallèlement.

5. Eolienne selon l'une quelconque des revendications 2 à 5, de plus avec des serre-flans (36) disposés en direction d'un axe longitudinal de nacelle qui maintiennent le tube à ailettes (34) ou les tubes à ailettes (34) dans leur position d'installation.

6. Eolienne selon l'une quelconque des revendications précédentes, de plus avec un ventilateur (38) qui est agencé de sorte que l'air (42) qu'il aspire contourne le réfrigérant de retour (28).
